# EUROPEAN PATENT SPECIFICATION

(11) **EP 4 453 471 B1**
(45) Date of publication and mention of the grant of the patent: **15.10.2025**
(21) Application number: 22835717.4
(22) Date of filing: 12.12.2022
(51) Int. Cl.: F22B 37/22, F28F 21/08

(54) **TUBE SHEET PROTECTION IN A PROCESS GAS WASTE HEAT BOILER**
ROHRBODENSCHUTZ IN EINEM PROZESSGASABWÄRMEKESSEL
PROTECTION DE PLAQUE TUBULAIRE DANS UNE CHAUDIÈRE DE RÉCUPÉRATION DE CHALEUR GAZ DE TRAITEMENT

(30) Priority: 22.12.2021 EP 21216924
(43) Date of publication of application: 30.10.2024
(73) Proprietor: Topsoe A/S, 2800 Kgs. Lyngby (DK)
(72) Inventor: LOWATER, Lasse Joel, 4700 Næstved (DK); GYDE THOMSEN, Søren, 2800 Kgs. Lyngby (DK)
(74) Representative: Topsoe A/S
(86) International application number: PCT/EP2022/085452
(87) International publication number: WO 2023/117551

(56) References cited:
- EP-A1- 3 355 022
- CN-B- 102 967 169
- US-A1- 2013 199 462

## Description

### FIELD OF THE INVENTION

The invention relates to the field of waste heat boilers, in particular the protection of tubes sheets in process gas waste heat boilers of the single-pass and straight-tube type and having thin flexible tube sheets, particularly process gas waste heat boilers for the recovery of heat from a process gas, in which the process gas is synthesis gas exiting a steam reforming unit, such as an autothermal reformer.

### BACKGROUND OF THE INVENTION

A process gas waste heat boiler (PGWHB) is a critical piece of equipment cooling the hot synthesis gas exiting reforming units such as autothermal reformer (ATR), secondary reformer, steam methane reformer (SMR) including electrical heated reformer (e-SMR), convection reformer including the so-called HTCR (Haldor Topsoe Convection Reformer) and the so-called HTER (Haldor Topsoe Exchange Reformer), or any other type of reforming unit normally used for producing synthesis gas for downstream synthesis processes such as for methanol synthesis, ammonia synthesis and hydrogen production. The heat from the process gas, i.e. synthesis gas exiting e.g. the ATR, is utilized to generate high pressure and high-quality steam for the process and to drive turbines. A synthesis gas, as is well known in the art, is a hot gas, e.g. 1000-1100°C when exiting an ATR, comprising carbon oxides and hydrogen, and typically at a pressure in the range 20-70 bar.

Process Gas Waste Heat Boilers (PGWHB), hereinafter for simplicity also referred as waste heat boilers, are most commonly manufactured as a tube and shell heat exchanger with thin tube sheets fabricated in low alloy steel. In many applications these tube sheets are supported by the staying action of the tubes and the tube sheets must be flexible to accommodate differences in mechanical and thermal expansion of tubes and shell respectively; hence the PGWHBs are normally referred to as having thin flexible tube sheets.

In case of a leak, which is a common failure mechanism for waste heat boilers after many years of service, the tubes must be plugged at the tube sheets. In order to carry out this plugging in a long-term reliable manner, plugging by welding is required. Due to the presence of hydrogen in the process gas, a subsequent Post Weld Heat Treatment (PWHT) is mandatory which is both difficult, costly, and risky in terms of overall equipment integrity, i.e. PGWHB integrity. Alternatively, temper bead welding can be carried out which would not require post weld heat treatment, but this technique is complicated to master and the result is not always predictable and reliable.

Hence, traditionally, the approach has involved the following:
- providing a PWHT of the entire waste heat boiler. However, as mentioned above, this is difficult, costly, and risky in terms of overall equipment integrity;
- providing a mechanical plugging such as a so-called "pop-a-plug" by a third party i.e. external supplier. However, this option is only valid if a leakage is in a tube. This solution is difficult or practically impossible to apply if failure is located at the tube to tube sheet weld;
- accept high hardness of weld of plug, which thus involves less ductility and thereby higher risk of hydrogen induced cracks in the tube to tube sheet weld and thus more prone to subsequent leaks in said weld.

In addition, a flexible thin tube sheet in the PGWHB is typically refractory lined on the hot side. This refractory lining may spall or detach after long time service and may after such detachment expose the tube sheet directly to the process gas causing very fast degradation of the tube sheet due to metal dusting corrosion. Metal dusting, as is well known in the art, is a catastrophic form of corrosion that takes place on metal materials exposed to gases with high carbon activities. Such refractory detachment may take place undetected and thus lead to loss of equipment integrity without any warning.

US 2013199462 A1 discloses a steam generator heating tube repair sleeves and method for repairing the heating tubes of steam generator, in particular steam generators used in nuclear power plants. The repair sleeves are used instead for repairing damaged weld seams of e.g. installing welded plugs or so-called re-welding. This citation teaches installing the repair sleeve on the respective tube end that is damaged.

Hence, the lower edge of the repair sleeve is welded to the cladding of the tube plate.

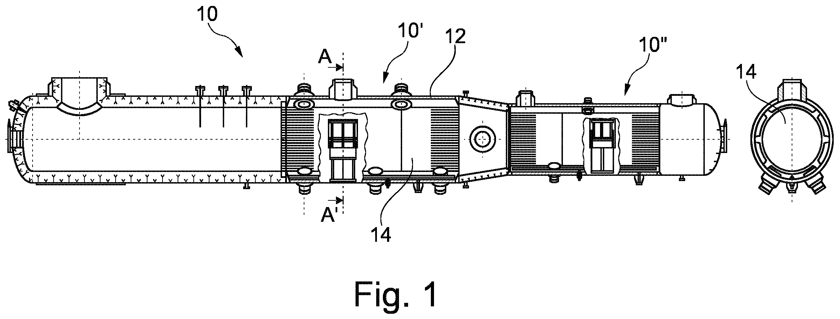

Further, it is well-known and implicit that this type of WHB for use in nuclear power plants are provided with thick tube plates, i.e. thick tube sheets, and with heating tubes emerging from the tube plate, as illustrated in Fig. 1 of this citation.

EP 3355022 A1 discloses a syngas loop waste heat boiler (WHB) preferably of the U-type i.e. comprising U-shaped tubes, the WHB here being a pressure equipment, typically for operation above 100 bar, installed in an ammonia production plant directly downstream the ammonia converter (ammonia synthesis reactor). The waste heat boiler comprises tube sheets which are protected against a specific corrosion phenomenon referred to as nitriding. The tube sheets are thick (up to 500 mm) and protected with internal protective sleeves welded at both ends to respective weld overlays, with the possibility of removal and reinstallation without performing any post weld heat treatment. It would be understood that a WHB with U-shaped tubes implicitly signify that the WBH comprises a thick tube sheet, as the tube sheet can support itself. This contrasts thin flexible tube sheets, which cannot support themselves and thus are not suitable for use in waste heat boilers comprising U-shaped tubes.

### SUMMARY OF THE INVENTION

It is a general object of the present invention to be able to increase life-expectancy of a PGWHB with thin flexible tube sheets of the single-pass straight tubes type.

More specifically, it is an object of the present invention to provide already in the fabrication step of such PGWHB, a protection of the thin flexible tube sheet that allows an easy to perform plugging by welding without a subsequent PWHT.

It is another object of the present invention to provide a simple method for protecting a PGWHB with thin flexible tube sheets of the single-pass straight tubes type against metal dusting corrosion of the tube sheet in case the refractory lining fails.

These and other objects are solved by the present invention.

Accordingly, in a first aspect the invention is a process gas waste heat boiler (PGWHB) as defined in claim 1.

Thereby, plugging with an easily executable welding which does not require post weld heat treatment, is possible. In case of a leak or a failure mechanism of the PGWHB after years of service, it is now possible to plug one or more of the straight tubes, hereinafter also referred to as "tubes", without resorting to post weld heat treatment, thus providing significant advantage for the equipment owner or plant operator in terms of reduced plant production downtime, cost, and risk. The tubes can thus be plugged by welding by means of uncomplicated, i.e. simple, welding procedure.

In an embodiment, said thickness including said weld overlay or cladding is 25, 30, 35, 40, 45, 50, 55, 60, or 65 mm. In a particular embodiment said thickness is 25-35 mm, e.g. 35 mm.

As is well-known in the art, the term "thin flexible tube sheet" means a tube sheet which cannot support itself. For instance, a thin flexible tube sheet is a stayed surface as described in ASME Code Section VIII Div. 2 - Section 4.9.

As is well-known in the art and for the purposes of the present application, the term "weld overlay" means welding processes to deposit one or more layers of metal with specific characteristics on a base metal to improve desirable properties that are not inherent to the base metal or to restore the original dimension of the component.

Typically, a wear-resistant material is applied onto the base metal which is also often referred to as parent component.

As is well-known in the art and for the purposes of the present application, the term "cladding" means the bonding together of dissimilar metals. Cladding includes explosion cladding, which is also a well-known process, more specifically a solid-state welding process that uses precision explosions to bond two dissimilar metals while retaining the mechanical, electrical and corrosion properties of both.

In an embodiment, the weld overlay or cladding is of thickness 4-10 mm.

In an embodiment, the thin flexible tube sheet has a thickness of 15-65 mm, for instance 20, 25, 30, 35, 40, 45, 50, 55, 60 mm.

For instance, the thin flexible sheet is 30-45 mm and the overlay or cladding has a thickness of 4-10 mm, such as 5, 6, 7, 8, 9 mm. For instance also, the thin flexible sheet has a thickness of 30 mm and the overlay or cladding has a thickness of 5 mm, thus providing said thickness including weld overlay or cladding of 35 mm.

While weld overlay on thick tube sheets in for instance U-tube waste heat boilers is known, the application of an overlay on a thin flexible tube sheet has not been contemplated at all due to the immediate and attendant negative effect on at least the stiffness and thereby structural integrity of the PGWHB: in thick tube sheets e.g. 100-500 mm thick, or more often 300-700 mm thick, such as 400, 500, 600 mm thick, a weld overlay applied thereto may only represent 3-4% or less of the thickness of the tube sheet, whereas in thin flexible tube sheets of a PGWHB according to the present invention, the weld overlay represents a significant portion of the tube sheet thickness. For instance, with a weld overlay of thickness 6-10 mm and the tube sheet being 35 mm thick, the weld overlay represents about 15-20% (for instance, 6/(35+6)*100 ~ 15%) of the thickness. For the thick tube sheets, the small thickness of the weld overlay compared to the tube sheet is ignored when the structural integrity of the tube sheet is analyzed. However, for a thin flexible tube sheet this is not possible as the thickness of the weld overlay constitutes a considerable part of the total tube sheet thickness. As a consequence, introducing a weld overlay or cladding on the tube sheet inherently reduces the flexibility of the tube sheet, thus forcing that non-trivial considerations and analysis techniques must be applied to ensure that the PGWHB is approvable in relation to international codes. A thick tube sheet thickness will minimize the impact from the weld overlay or cladding on the overall stiffness of the tube sheet, as for the U-tube configurations, but this is not desirable here as the temperature of the tube sheet will increase and the risk of approaching the metal temperature limit for metal dusting increases (see also farther below). Furthermore, thick tube sheets will result in too high tube sheet stresses and/or too high stresses in the tube to tube sheet joints.

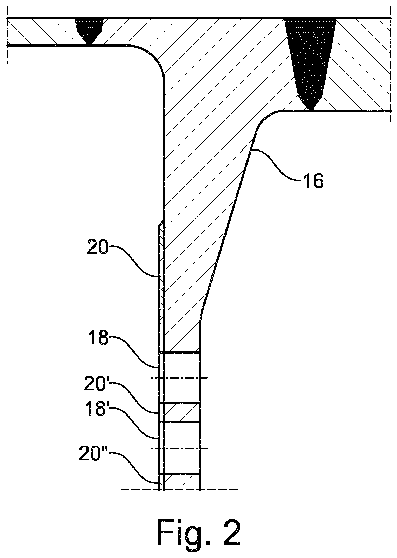

It would be understood that the thickness of a tube sheet is the thickness measured in the perforated part of the tube sheet, i.e. the portion of a tube sheet (inlet tube sheet or outlet tube sheet) which is provided with said holes defining an inlet and outlet opening in, respectively, of the inlet and outlet tube sheet. For instance, in appended Fig. 2, the thickness is measured in the portion of the metal sheet 16 having inlet openings 18, 18' and corresponding weld overlay 20', 20". This corresponds to the portion of the tube sheet having the lowest thickness.

It would also be understood that in the feature "the inlet and outlet tube sheets are provided with a weld overlay or cladding at least at said inlet and outlet opening of each of the holes", the term "at least" means that the weld overlay or cladding may extend away from the inlet opening along the surface of the inlet or outlet tube sheet. For instance, as weld overlay 20 in appended Fig. 2.

As mentioned before, the flexible thin tube sheet in the PGWHB is typically refractory lined on the hot side. This refractory lining may spall or detach after long time service and may after such detachment expose the tube sheet directly to the process gas causing very fast degradation of the tube sheet due to metal dusting corrosion. Such refractory detachment may take place undetected and thus lead to loss of equipment integrity without any warning.

More specifically, the PGWHB can be attacked by catastrophic metal dusting if the metal temperatures exceed 400-450°C depending on the gas composition. The tube sheets of the PGWHB are normally protected by refractory layers in order to keep the temperature at an acceptable level; however, if the refractory is damaged over time, the temperature may rise and cause metal dusting corrosion, ultimately leading to the costly replacement of the PGWHB and significant downtime for the client.

Accordingly, in an embodiment according to the first aspect of the invention, the weld overlay or cladding is of thickness 4-10 mm in a metal dusting resistant material selected from: alloy 601, alloy 690, alloy 602CA, alloy 625, alloy 693 or alloy 699 XA.

As used herein, alloy 601 is a material having the composition in wt.%: Ni 58-63%,:Cr 21-25%, Al 1-1.7%, Mn 1% max.

As used herein, alloy 690 is a material having the composition in wt%: Ni ≥58, Cr 27-31, Fe 7-11, Cu 0.5 C 0.05, Si 0.5, Mn 0.5, S 0.015.

As used herein, alloy 602CA is a material having the composition in wt%: Cr 26.0, Ni (balance), C 0.25, Al 2.40, Ti 0.20, Y 0.12, Zr 0.10, Mn 0.15, Si 0.50, Cu 0.10, Fe 11.00, all wt% being max.

As used herein, alloy 625 is a material having the composition in wt%: Cr 20.0-23.0, Ni min 58.0, C 0.10, Al 0.40, Ti 0.40, Mn 0.50, Si 0.50, Fe 5.0, P 0.015, S 0.015, Nb+Ta 3.15-4.15, Mo 8.0-10.0 all wt% being max.

As used herein, alloy 693 is a material having the composition in wt%: Ni (balance), Cr 27.0-31.0, Fe 2.5-6.0, Al 2.5-4.0, Nb 0.5-2.5, Mn 1.0, Ti 1.0, Cu 0.5 Si 0.5, C 0.15, S 0.01.

As used herein, alloy 699 XA is a material having the composition in wt%: Ni (balance), Cr 26.0-30.0, Fe 2.5, Al 1.9-3.0, Nb 0.5, Mn 0.5, Ti 0.6, Cu 0.5 Si 0.5, C 0.1, S 0.01 Zr 0.1, N 0.05, P 0.02, B 0.008.

Thereby, the weld overlay or cladding consisting of a high nickel type material - such as alloy 601, Alloy 690, or alloy 602CA, which are metal dusting resistant materials, via the weld overlay or cladding is applied on the thin flexible tube sheet, so that apart from enabling an easy to perform plugging by welding without a subsequent PWHT, the tube sheets at the same time have the ability to withstand the adverse consequences of a spalled or detached refractory and direct process gas exposure. Additional protection of the tube sheets against this drastic form of corrosion, metal dusting, is thus provided, while at the same time maintaining the required safety and structural integrity of the PGWHB as well as allowing synthesis gas flow along the tube sheet surface.

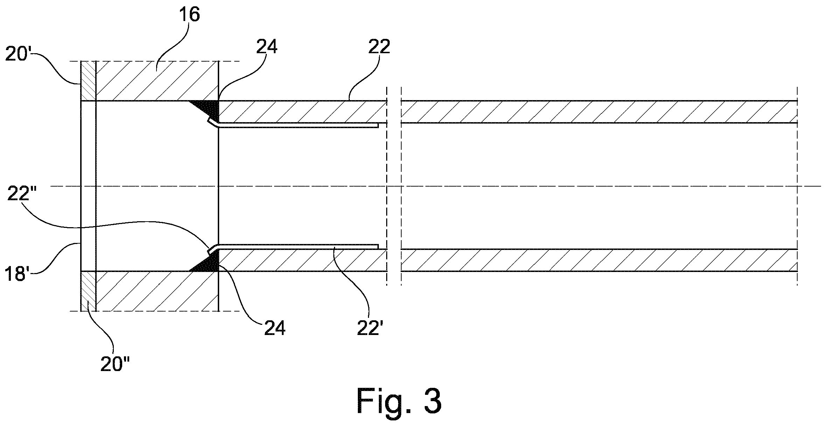

In another embodiment according to the first aspect of the invention, the PGWHB is also provided with a tube to tube sheet welding. Thereby the ends of each straight tube are welded to each tube sheet. In a particular embodiment, the inlet part of the tube is welded to the shell side of the inlet tube sheet, thus providing a space to accommodate a thermal protection element such a ceramic insert of the tube sheet and the tube to tube sheet weld. The tube to tube sheet weld is thereby located at a position where it is cooled the most by the boiling water on the shell side. For example, the process gas running in the tube is approximately 1000°C and the boiling water is approximately 300°C. It would be understood that this is at the inlet part of the tube. In addition, this configuration enables avoiding any gaps which may convey undesired corrosion, such as crevice corrosion in the inlet tube sheet. The opposite end of the tube is welded to the outlet tube sheet closer to the process gas side in case thermal protection of the outlet tube sheet is not required due to the lower temperature of the process gas at this end of the tube; as e.g. illustrated in Fig. 3-5.

For the purposes of the present application, in connection with any of the embodiments of the invention, the term "suitably" means "optionally", i.e. an optional embodiment.

In an embodiment, each straight tube is provided with an internal liner, such as an internal protective sleeve, which is arranged along the internal surface of each straight tube and extends towards said inlet or outlet tube sheet at a distance from said inlet or outlet opening, so that an end of the internal liner extends to, respectively, said one end or said opposite end of the straight tube. Optionally, the liner further extends and contacts the tube to tube sheet weld. For instance, an end of the internal liner is provided at a distance from the inlet opening corresponding to the thickness of the inlet tube sheet including said weld overlay or cladding, as illustrated in appended Fig. 3. Hence, the end of the internal liner is not welded to said respective weld overlay or cladding provided in the inlet and outlet tube sheets. In a particular embodiment, said internal liner is mechanically connected to said internal surface of each straight tube and thus to the inside of the tube, i.e. by mechanically established contact, such as by expansion by hydraulic pressure and/or by rolling. This enables simpler replacement of said internal liner, as no welding is required.

Thereby, a simpler provision of internal liners is possible compared to for instance the above-mentioned EP 3355022 A1, in which internal protective sleeves are welded at both ends to respective weld overlays. Hence, in the present invention, each straight tube is absent of an internal protective sleeve being arranged along the internal surface of each straight tube and which ends of said sleeve are welded to respective weld overlays. Furthermore, in said EP 3355022 A1 the protection (the protective sleeve) is provided to prevent corrosion by nitriding of tube sheet and tube to tube sheet weld, whereas in the present invention, the internal liner is provided for protecting the tube itself and not the tube sheet against metal dusting. It would be understood, that EP 3355022 A1 relates to the waste heat boiler of an ammonia synthesis loop, which waste heat boiler comprises thick tube sheets. This boiler is located downstream the ammonia converter of the ammonia synthesis loop. In the present invention, weld overlay or cladding is provided on a thin flexible tube sheet of a front-end process gas waste heat boiler, thus upstream e.g. an ammonia converter. Accordingly, internal liners such as protective sleeves are used for completely different purposes in the two types of boilers.

In an embodiment, the PGWHB is arranged horizontally, as e.g. shown in appended Fig. 1.

In an embodiment, said plurality of straight tubes are arranged in one or more compartments, which thereby define a plurality of inlet and outer tube sheets, as e.g. also shown in appended Fig. 1. Two compartments enable the use of smaller tubes in subsequent compartments, thereby increasing the average heat transfer rate for the boiler. This decreases the overall required heat transfer area.

In a second aspect, the invention relates to a method for providing a welding of straight tubes to the inlet and outlet tube sheets of the PGWHB of the first aspect of the invention, in which the method comprises, suitable in the following order:
i)- providing a weld overlay or cladding such as explosion cladding at least at the inlet and outlet tube sheet of the PGWHB;
ii) providing, e.g. by drilling, the plurality of holes in the inlet tube sheet and outlet tube sheet;
iii) introducing, e.g. inserting, the plurality of straight tubes into the holes for connecting each of the straight tubes at one end with the inlet tube sheet and at the opposite end with the outlet tube sheet; and
iv) providing a tube to tube sheet welding at the one end of a straight tube with the inlet tube sheet, and at the opposite end of the straight tube with the outlet tube sheet.

In an embodiment according to the second aspect of the invention, step i) is conducted prior to step ii), i.e. prior to e.g. the drilling of holes in the tube sheets, thereby avoiding excessive distortion of the tube sheets due to the weld overlay or cladding application.

In an embodiment according to the second aspect of the invention, the cladding by means of a weld overlay is applied at least two times, for instance 3, 4, 5 or 6 times, suitably in accordance with a predetermined sequence.

In an embodiment according to the second aspect of the invention, the tube to tube sheet welding is provided as multiple pass strength welds optionally with staggered runs, suitably as fully automatic multiple pass strength welds with staggered runs for the inlet tube sheet and the outlet tube sheet. This provides space for installing adequate thermal protection to the tube sheet by means of installing insulating materials, such as a ceramic insert as described earlier, and further ensures no gaps being formed between the tubes and the tube sheets, even after long operation times, and thus minimization of risks of e.g. crevice corrosion. The tube to tube sheet welding is e.g. conducted by Gas Tungsten Arc Welding (GTAW) or other conventional techniques.

In an embodiment according to the second aspect of the invention, the flexible tube sheets are verified by means of finite element analysis in accordance with ASME Section VIII, Division 2.

In the design phase, the PGWHB with a thin flexible tube sheet is analyzed by Finite Element Analysis (FEA) to be approved in accordance with the international pressure vessel codes, e.g. the ASME pressure vessel code. The tube sheet must be able to take up displacements in the order of 1-5 mm without being overstressed and without exerting unacceptable stresses on adjacent components such as the tubes and the tube sheet to shell junction. As already mentioned, introducing an overlay or cladding on the tube sheet with a thickness close to or about the same order of magnitude as the tube sheet, as in the present invention, inherently transforms the tube sheet from a "uni-metallic" plate to a bi-metallic plate, so that non-trivial considerations and analysis techniques must be applied for the latter to ensure that the PGWHB is approvable in relation to the international codes. Such techniques involve splitting stresses in the weld overlay from the stresses in the base material and performing individual evaluation of those two layers. Such evaluation can only be done by means of finite element analysis and represents normally a significant deterrent for the use of a weld overlay or cladding on thin flexible tube sheets.

In an embodiment according to the second aspect of the invention, the method is conducted in the PGWHB fabrication step, i.e. outside the location where the PGWHB is installed for operation.

Hence, the implementation of the invention is conducted during the construction of a new PGWHB, so that already at the outset it is possible to provide a boiler (PGWHB) having robustness towards potential undiscovered internal refractory failures as well as ensuring that tube plugging, after many years of service, can take place in uncomplicated and expedient manner. In essence, this means that the typical life-expectancy of a PGWHB is significantly increased.

In a third aspect, the invention is a method for protecting the PGWHB according to the first aspect of the invention, in particular the inlet and outlet tube sheets thereof; the method comprising: after long-term operation i.e. after at least one year of operation, e.g. after 5 or 10 years of operation, plugging at least one of said straight tubes by welding to said weld overlay or cladding.

According to the third aspect of the invention, the method does not comprise a subsequent Post Weld Heat Treatment (PWHT).

Thereby, plugging of tubes by welding by means of uncomplicated welding procedures is possible. Mechanical plugging by means of a solution supplied by a third party such as "pop-a-plug" and which is only valid if leakage is in the tube, is avoided. This mechanical plugging solution (pop-a-plug) is difficult or impossible to implement if failure is located at e.g. the tube to tube sheet weld.

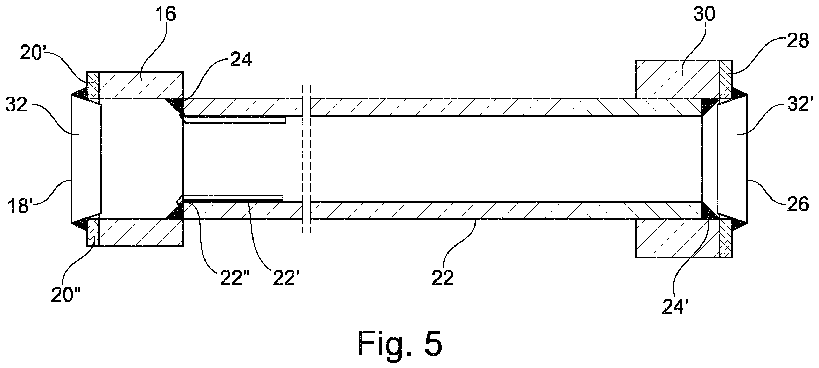

It would be understood, that the term "plugging" as used herein means blocking the tube opening with a plug to prevent flow through the tube. The plug must be able to withstand the pressure from the shell side only. Such a plug has to be installed in the inlet tube sheet and the corresponding hole in the outlet tube sheet, as for instance illustrated in appended Fig. 5.

In a fourth aspect, the invention is a process for cooling a process gas exiting a reforming unit, said reforming unit being any of: autothermal reformer (ATR), secondary reformer, steam methane reformer (SMR) including e-SMR, or convection reformer; said process gas being a synthesis gas comprising carbon oxides and hydrogen, wherein the process comprises cooling the synthesis gas by passing it through the process gas waste heat boiler (PGWHB) according to the first aspect of the invention.

The synthesis gas runs through the tubes of the PGWHB while boiler feed water (BFW) runs through the shell side, thus producing steam while the synthesis gas is cooled and fed to downstream processing units. For instance, a synthesis gas exits an ATR at 1000-1100°C and a pressure in the range 20-70 bar.

Any of the embodiments and associated benefits of the first aspect of the invention may be used together with any of the embodiments according to the second or third or fourth aspect of the invention.

### BRIEF DESCRIPTION OF THE DRAWINGS

Fig. 1 shows a process gas waste heat boiler of the straight tube type arranged horizontally and having an inlet and outlet tube sheets in several compartments. The cross-section A-A' is shown in the right-hand side of the figure.
Fig. 2 shows a view of weld overlay or cladding applied on the inlet tube sheet of the process gas waste heat boiler of Fig. 1.
Fig. 3 shows a close-up view of weld overlay or cladding on an inlet opening of a straight tube in the inlet tube sheet of Fig. 2.
Fig. 4 shows a close-up view of weld overlay or cladding on an outlet opening of a straight tube in the outlet tube sheet of Fig. 1.
Fig. 5 shows a close-up view of plugging to the weld overlay or cladding in the inlet and outlet tube sheet of Fig. 3 and 4.

### DETAILED DESCRIPTION

Fig. 1 shows a PGWHB 10 of the single-pass and straight-tube type, having thin flexible tube sheets, and arranged horizontally. The plurality of straight tubes is arranged in one or more compartments (10', 10"), which thereby define a plurality of inlet and outer tube sheets, as e.g. also shown in the figure. Within shell 12 a plurality of straight tubes 14 are arranged, as also depicted in the cross-section A-A' on the right-hand side of the PGWHB - although not visible therein, it is understood that there is a plurality of tubes 14 corresponding to the cross-section A-A' -.

Fig. 2 shows a cross-section of the inlet tube sheet 16 of the PGWHB 10, this being a thin flexible tube sheet of thickness e.g. 35 mm and being provided with a plurality of holes, each defining an inlet opening 18, 18'. The inlet tube sheet 16 is provided with a weld overlay or cladding 20, 20', 20" e.g. 6 mm thick, at least at the inlet openings 18, 18'. The weld overlay or cladding 20 extends away from the inlet opening along the surface of the inlet tube sheet 16.

Fig. 3 shows a close-up view of weld overlay or cladding on inlet opening 18' of the inlet tube sheet 16 of Fig. 2. As illustrated, one of the plurality of straight tubes 14, here depicted as straight tube 22, is connected at one end to inlet tube sheet 16 by means of a tube to tube sheet welding 24, and further a weld overlay or cladding 20', 20" is provided on the inlet tube sheet 16 at the inlet opening 18', as depicted in the figure. The tube 22 is provided with an internal liner 22', such as an internal protective sleeve, which is arranged along the internal surface of the tube and extends towards the inlet tube sheet 16 at a distance from said inlet opening 18', so that the end 22" of the internal liner 22' extends to the one end of straight tube 22. For instance, an end of the internal liner 22' is provided at a distance from the inlet opening 18' corresponding to the thickness of the inlet tube sheet 16 including the weld overlay or cladding 20', 20". The liner 22' further extends and contacts the tube to tube sheet weld 24. Accordingly, the end of the internal liner is not welded to said respective weld overlay or cladding 20', 20". Rather than being welded to the weld overlay or cladding, the internal liner 22' is mechanically connected to said internal surface of each straight tube 22, for instance by expansion via hydraulic pressure and/or by rolling. The inlet part of the tube is suitably welded 24 to the shell side of the inlet tube sheet at the point of connection as illustrated herein, thereby providing a space to accommodate a thermal protection element such a ceramic insert of the tube sheet and the tube to tube sheet weld. The tube to tube sheet weld 24 is thereby located at a position where it is cooled the most by the boiling water on the shell side and which circulates at about 300°C (the process gas running inside the tube 22 is e.g. about 1000°C, as it receives a hot synthesis gas from an upstream reforming unit).

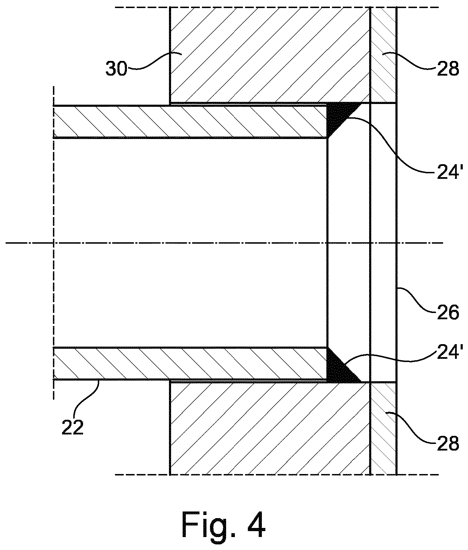

Fig. 4 shows a close-up view of weld overlay or cladding on the outlet tube sheet 30 of the PGWHB, the tube sheet also being a thin flexible tube sheet of thickness e.g. 35 mm and being provided with a plurality of holes, each defining an inlet opening, here illustrated as a single inlet opening 26. The straight tube 22 is connected at this opposite end to outlet tube sheet 30 by means of a tube to tube sheet welding 24', and further, a weld overlay or cladding 28, e.g. 6 mm thick weld overlay, is provided on the outlet tube sheet 30 at the inlet opening 26, as depicted in the figure.

Fig. 5 shows the straight tube 22 with both inlet 16 and outlet 30 tube sheets, as already described in connection with Fig. 3 and 4. In case of a leak in the PGWHB 10 after years of service, the tubes are plugged by plugs 32, 32' at the tube sheets 16, 30. In order to carry out this plugging in a long-term reliable manner, plugging by welding is required. The plugging is conducted by welding to the weld overlay or cladding 20', 20" of the inlet tube sheet 16, and/or to the weld overlay or cladding 28 of the outlet tube sheet 30, as illustrated by the corresponding black-areas at the point of contact of for instance plug 32' and weld overlay or cladding 28, thereby avoiding Post Weld Heat Treatment (PWHT) or the use of mechanical plugging, such as the so-called pop-a-plug.

## Claims

1. Process gas waste heat boiler (PGWHB) (10) comprising:
a shell (12) within which a plurality of straight tubes (14, 22) are arranged, each of the straight tubes (22) being connected at its one end with an inlet tube sheet (16) and with an outlet tube sheet (30) at its opposite end; in which the inlet tube sheet (16) and the outlet tube sheet (30) are provided with a plurality of holes adapted to cooperate with each of said straight tubes (22) for respectively receiving and exiting a process gas, such as a synthesis gas,
wherein each of the holes in the inlet tube sheet (16) defines an inlet opening (18, 18') and each of the holes in the outlet tube sheet (30) defines an outlet opening (26),
wherein at least the inlet and outlet tube sheets (16, 30) are provided with a weld overlay or cladding (20, 20', 20", 28) at least at said inlet and outlet opening (18, 18', 26) of each of the holes,
**characterised in that**
the inlet and outlet tube sheets (16, 30) are thin flexible tube sheets made of low alloy steel and having a thickness including said weld overlay or cladding of 20-70 mm;
and wherein the thin flexible tube sheet is a stayed surface as described in ASME Code Section VIII Div. 2 - Section 4.9.

2. Process gas waste heat boiler (10) according to claim 1, wherein the thin flexible tube sheet has a thickness of 15-65 mm, for instance 20, 25, 30, 35, 40, 45, 50, 55, 60 mm.

3. Process gas waste heat boiler (10) according to any of claims 1-2, wherein the weld overlay or cladding (20, 20', 20", 28) is of thickness 4-10 mm in a metal dusting resistant material selected from: alloy 601, alloy 690, alloy 602CA, alloy 625, alloy 693 or alloy 699 XA.

4. Process gas waste heat boiler (10) according to any of claims 1-3, which is also provided with a tube to tube sheet welding (24, 24').

5. Process gas waste heat boiler (10) according to claim 4, wherein the inlet part of the tube (22) is welded to the shell side of the inlet tube sheet (16).

6. Process gas waste heat boiler (10) according to any of claims 1-5, wherein each straight tube (22) is provided with an internal liner (22'), such as an internal protective sleeve, which is arranged along the internal surface of each straight tube (22) and extends towards said inlet (16) or outlet (30) tube sheet at a distance from said inlet or outlet opening (18, 18', 26), so that an end (22") of the internal liner (22') extends to respectively, said one end or said opposite end of straight tube (22).

7. Process gas waste heat boiler (10) according to claim 6, wherein said internal liner (22') is mechanically connected to said internal surface of each straight tube (22), such as by expansion by hydraulic pressure and/or by rolling.

8. Process gas waste heat boiler (10) according to any of claims 1-7, wherein said plurality of straight tubes (14, 22) are arranged in one or more compartments (10', 10"), which thereby define a plurality of inlet and outer tube sheets.

9. Method for providing a welding of straight tubes to the inlet and outlet tube sheets of the PGWHB of any of claims 1-8, comprising:
i)- providing a weld overlay or cladding such as explosion cladding at least at the inlet and outlet tube sheet of the PGWHB;
ii) providing the plurality of holes in the inlet tube sheet and outlet tube sheet;
iii) introducing the plurality of straight tubes into the holes for connecting each of the straight tubes at one end with the inlet tube sheet and at the opposite end with the outlet tube sheet; and
iv) providing a tube to tube sheet welding at the one end of a straight tube with the inlet tube sheet, and at the opposite end of the straight tube with the outlet tube sheet.

10. Method according to claim 9, wherein step i) is conducted prior to step ii), i.e. prior to e.g. drilling of holes in the tube sheets.

11. Method according to any of claims 9-10, wherein the tube to tube sheet welding is provided as multiple pass strength welds optionally with staggered runs, suitably as fully automatic multiple pass strength welds with staggered runs for the inlet tube sheet and the outlet tube sheet.

12. Method according to any of claims 9-11, wherein the thin flexible tube sheets are verified by means of finite element analysis in accordance with ASME Section VIII, Division 2.

13. Method according to any of claims 9-12, wherein the method is conducted in the PGWHB fabrication step.

14. Method for protecting the PGWHB of any of claims 1-8, in particular the inlet and outlet tube sheets thereof, the method comprising: after long-term operation i.e. after at least one year of operation, plugging at least one of said straight tubes by welding to said weld overlay or cladding.

15. Process for cooling a process gas exiting a reforming unit, said reforming unit being any of: autothermal reformer (ATR), secondary reformer, steam methane reformer (SMR) including e-SMR, or convection reformer; said process gas being a synthesis gas comprising carbon oxides and hydrogen, wherein the process comprises cooling the synthesis gas by passing it through the process gas waste heat boiler (PGWHB) according to any of claims 1-8.

## Patentansprüche

1. Prozessgas-Abwärmekessel (PGWHB) (10), umfassend:
einen Mantel (12), in dem eine Vielzahl gerader Rohre (14, 22) angeordnet ist, wobei jedes der geraden Rohre (22) an seinem einen Ende mit einem Einlassrohrboden (16) und an seinem gegenüberliegenden Ende mit einem Auslassrohrboden (30) verbunden ist; wobei der Einlassrohrboden (16) und der Auslassrohrboden (30) mit einer Vielzahl von Löchern bereitgestellt sind, die angepasst sind, um mit jedem der geraden Rohre (22) zusammenzuwirken, um jeweils ein Prozessgas, wie ein Synthesegas, aufzunehmen und austreten zu lassen,
wobei jedes der Löcher in dem Einlassrohrboden (16) eine Einlassöffnung (18, 18') definiert und jedes der Löcher in dem Auslassrohrboden (30) eine Auslassöffnung (26) definiert, wobei mindestens die Einlass- und Auslassrohrböden (16, 30) mindestens an der Einlass- und Auslassöffnung (18, 18', 26) jedes der Löcher mit einer Schweißauflage oder -plattierung (20, 20', 20", 28) bereitgestellt sind,
**dadurch gekennzeichnet, dass**
die Einlass- und Auslassrohrböden (16, 30) dünne, flexible Rohrböden aus niedrig legiertem Stahl sind und eine Dicke einschließlich der Schweißauflage oder - plattierung von 20-70 mm aufweisen;
und wobei der dünne, flexible Rohrboden eine abgestützte Oberfläche ist, wie im ASME-Code Abschnitt VIII Div. 2 - Abschnitt 4.9 beschrieben.

2. Prozessgas-Abwärmekessel (10) nach Anspruch 1, wobei der dünne, flexible Rohrboden eine Dicke von 15-65 mm, beispielsweise 20, 25, 30, 35, 40, 45, 50, 55, 60 mm aufweist.

3. Prozessgas-Abwärmekessel (10) nach einem der Ansprüche 1-2, wobei die Schweißauflage oder -plattierung (20, 20', 20", 28) von einer Dicke von 4-10 mm ist und aus einem gegen Metallabgang beständigen Material ist, ausgewählt aus: Legierung 601, Legierung 690, Legierung 602CA, Legierung 625, Legierung 693 oder Legierung 699 XA.

4. Prozessgas-Abwärmekessel (10) nach einem der Ansprüche 1-3, der auch mit einer Rohr-Rohrboden-Verschweißung (24, 24') bereitgestellt ist.

5. Prozessgas-Abwärmekessel (10) nach Anspruch 4, wobei der Einlassteil des Rohres (22) mit der Mantelseite des Einlassrohrbodens (16) verschweißt ist.

6. Prozessgas-Abwärmekessel (10) nach einem der Ansprüche 1-5, wobei jedes gerade Rohr (22) mit einer inneren Auskleidung (22') wie einer inneren Schutzhülle bereitgestellt ist, die entlang der inneren Oberfläche jedes geraden Rohrs (22) angeordnet ist und sich in einem Abstand von der Einlass- oder Auslassöffnung (18, 18', 26) in Richtung des Einlass- (16) oder Auslassrohrbodens (30) erstreckt, sodass ein Ende (22") der inneren Auskleidung (22') sich jeweils bis zu dem einen Ende oder dem gegenüberliegenden Ende des geraden Rohrs (22) erstreckt.

7. Prozessgas-Abwärmekessel (10) nach Anspruch 6, wobei die innere Auskleidung (22') mechanisch mit der inneren Oberfläche jedes geraden Rohrs (22) verbunden ist, wie durch Ausdehnung durch hydraulischen Druck und/oder Walzen.

8. Prozessgas-Abwärmekessel (10) nach einem der Ansprüche 1-7, wobei die Vielzahl der geraden Rohre (14, 22) in einem oder mehreren Kompartimenten (10', 10") angeordnet ist, die dadurch eine Vielzahl von Einlass- und Außenrohrböden definieren.

9. Verfahren zum Bereitstellen einer Verschweißung gerader Rohre mit den Einlass- und Auslassrohrböden des PGWHB nach einem der Ansprüche 1-8, umfassend:
i)- Bereitstellen einer Schweißauflage oder -plattierung, wie einer Explosionsplattierung, mindestens an dem Einlass- und Auslassrohrboden des PGWHB;
ii) Bereitstellen der Vielzahl von Löchern in dem Einlassrohrboden und Auslassrohrboden;
iii) Einführen der Vielzahl von geraden Rohren in die Löcher, um jedes der geraden Rohre an einem Ende mit dem Einlassrohrboden und an dem gegenüberliegenden Ende mit dem Auslassrohrboden zu verbinden; und
iv) Bereitstellen einer Rohr-Rohrboden-Verschweißung an dem einen Ende eines geraden Rohrs mit dem Einlassrohrboden und an dem gegenüberliegenden Ende des geraden Rohrs mit dem Auslassrohrboden.

10. Verfahren nach Anspruch 9, wobei Schritt i) vor Schritt ii) ausgeführt wird, d. h. vor z. B. Bohren von Löchern in die Rohrböden.

11. Verfahren nach einem der Ansprüche 9-10, wobei die Rohr-Rohrboden-Verschweißung als Mehrlagen-Festigkeitsschweißung mit wahlweise versetzten Läufen bereitgestellt wird, zweckmäßigerweise als vollautomatische Mehrlagen-Festigkeitsschweißung mit versetzten Läufen für den Einlassrohrboden und den Auslassrohrboden.

12. Verfahren nach einem der Ansprüche 9-11, wobei die dünnen, flexiblen Rohrböden mittels einer Finite-Elemente-Analyse gemäß ASME Abschnitt VIII, Division 2 überprüft werden.

13. Verfahren nach einem der Ansprüche 9-12, wobei das Verfahren in dem PGWHB-Fertigungsschritt ausgeführt wird.

14. Verfahren zum Schützen des PGWHB nach einem der Ansprüche 1-8, insbesondere der Einlass- und Auslassrohrböden davon, wobei das Verfahren umfasst: nach Langzeitbetrieb, d. h. nach mindestens einem Jahr Betrieb, Verschließen mindestens eines der geraden Rohre durch Schweißen an die Schweißauflage oder -plattierung.

15. Verfahren zum Kühlen eines Prozessgases, das aus einer Reformierungseinheit austritt, wobei die Reformierungseinheit eine der folgenden ist: autothermer Reformer (ATR), Sekundärreformer, Dampf-Methan-Reformer (SMR), einschließlich e-SMR, oder Konvektionsreformer; wobei das Prozessgas ein Synthesegas ist, das Kohlenstoffoxide und Wasserstoff umfasst, wobei der Prozess Kühlen des Synthesegases umfasst, indem es durch den Prozessgas-Abwärmekessel (PGWHB) nach einem der Ansprüche 1-8 geleitet wird.

## Revendications

1. Chaudière de récupération de chaleur de gaz de processus (PGWHB) (10) comprenant :
une enveloppe (12) dans laquelle une pluralité de tubes droits (14, 22) sont agencés, chacun des tubes droits (22) étant relié à l'une extrémité à une plaque tubulaire d'entrée (16), et à une plaque tubulaire de sortie (30) à son extrémité opposée ; dans laquelle la plaque tubulaire d'entrée (16) et la plaque tubulaire de sortie (30) sont dotées d'une pluralité de trous conçus pour coopérer avec chacun desdits tubes droits (22) pour recevoir et évacuer respectivement un gaz de processus, tel qu'un gaz de synthèse,
dans laquelle chacun des trous dans la plaque tubulaire d'entrée (16) définit une ouverture d'entrée (18, 18') et chacun des trous dans la plaque tubulaire de sortie (30) définit une ouverture de sortie (26), dans laquelle au moins les plaques tubulaires d'entrée et de sortie (16, 30) sont dotées d'un rechargement par soudure ou d'un plaquage (20, 20', 20", 28), du moins au niveau desdites ouvertures d'entrée et de sortie (18, 18', 26) de chacun des trous,
**caractérisée en ce que**
les plaques tubulaires d'entrée et de sortie (16, 30) sont des plaques tubulaires flexibles minces faites d'acier faiblement allié et présentant une épaisseur incluant ledit rechargement par soudure ou plaquage de 20-70 mm ;
et dans laquelle la plaque tubulaire flexible mince est une surface haubanée telle que décrite dans le code ASME Section VIII Div. 2 - Section 4.9.

2. Chaudière de récupération de chaleur de gaz de processus (10) selon la revendication 1, dans laquelle la plaque tubulaire flexible mince présente une épaisseur de 15-65 mm, par exemple 20, 25, 30, 35, 40, 45, 50, 55, 60 mm.

3. Chaudière de récupération de chaleur de gaz de processus (10) selon l'une quelconque des revendications 1-2, dans laquelle le rechargement par soudure ou le plaquage (20, 20', 20", 28) est d'une épaisseur de 4-10 mm dans un matériau résistant à la carburation pulvérisante choisi parmi : l'alliage 601, l'alliage 690, l'alliage 602CA, l'alliage 625, l'alliage 693 ou l'alliage 699 XA.

4. Chaudière de récupération de chaleur de gaz de processus (10) selon l'une quelconque des revendications 1-3, qui est également dotée d'une soudure tube-plaque tubulaire (24, 24').

5. Chaudière de récupération de chaleur de gaz de processus (10) selon la revendication 4, dans laquelle la partie d'entrée du tube (22) est soudée au côté enveloppe de la plaque tubulaire d'entrée (16).

6. Chaudière de récupération de chaleur de gaz de processus (10) selon l'une quelconque des revendications 1-5, dans laquelle chaque tube droit (22) est doté d'une chemise interne (22'), telle qu'un manchon de protection interne, qui est agencée le long de la surface interne de chaque tube droit (22) et s'étend vers ladite plaque tubulaire d'entrée (16) ou de sortie (30) à distance de ladite ouverture d'entrée ou de sortie (18, 18', 26), de sorte qu'une extrémité (22") de la chemise interne (22') s'étende respectivement jusqu'à ladite extrémité ou ladite extrémité opposée du tube droit (22).

7. Chaudière de récupération de chaleur de gaz de processus (10) selon la revendication 6, dans laquelle ladite chemise interne (22') est reliée mécaniquement à ladite surface interne de chaque tube droit (22), par exemple par dilatation par pression hydraulique et/ou par laminage.

8. Chaudière de récupération de chaleur de gaz de processus (10) selon l'une quelconque des revendications 1-7, dans laquelle ladite pluralité de tubes droits (14, 22) sont agencés dans un ou plusieurs compartiments (10', 10"), qui définissent ainsi une pluralité de plaques tubulaires d'entrée et extérieures.

9. Procédé de fourniture d'une soudure de tubes droits aux plaques tubulaires d'entrée et de sortie de la PGWHB selon l'une quelconque des revendications 1-8, comprenant :
i) la fourniture d'un rechargement par soudure ou d'un plaquage tel qu'un plaquage par explosion au moins au niveau des plaques tubulaires d'entrée et de sortie de la PGWHB ;
ii) la fourniture de la pluralité de trous dans la plaque tubulaire d'entrée et la plaque tubulaire de sortie ;
iii) l'introduction de la pluralité de tubes droits dans les trous pour relier chacun des tubes droits à une extrémité à la plaque tubulaire d'entrée et, à l'extrémité opposée, à la plaque tubulaire de sortie ; et
iv) la fourniture d'une soudure tube-plaque tubulaire à une extrémité d'un tube droit à la plaque tubulaire d'entrée, et à l'extrémité opposée du tube droit à la plaque tubulaire de sortie.

10. Procédé selon la revendication 9, dans lequel l'étape i) est mise en œuvre avant l'étape ii), c'est-à-dire avant, par exemple, le perçage de trous dans les plaques tubulaires.

11. Procédé selon l'une quelconque des revendications 9-10, dans lequel la soudure tube-plaque tubulaire est fournie sous forme de soudures de résistance à passes multiples, éventuellement avec des cordons alternés, de manière appropriée sous forme de soudures de résistance à passes multiples entièrement automatiques avec des cordons alternés pour la plaque tubulaire d'entrée et la plaque tubulaire de sortie.

12. Procédé selon l'une quelconque des revendications 9-11, dans lequel les plaques tubulaires flexibles minces sont vérifiées au moyen d'une analyse par éléments finis conformément à l'ASME Section VIII, Division 2.

13. Procédé selon l'une quelconque des revendications 9-12, dans lequel le procédé est mis en œuvre à l'étape de fabrication de PGWHB.

14. Procédé de protection de la PGWHB selon l'une quelconque des revendications 1-8, en particulier des plaques tubulaires d'entrée et de sortie de celle-ci, le procédé comprenant : après un fonctionnement à long terme, c'est-à-dire après au moins un an de fonctionnement, le bouchage d'au moins un desdits tubes droits par soudure audit rechargement par soudure ou plaquage.

15. Processus de refroidissement d'un gaz de processus évacué d'une unité de reformage, ladite unité de reformage étant l'un quelconque parmi : un reformeur autothermique (ATR), un reformeur secondaire, un reformeur de méthane à la vapeur (SMR) incluant un e-SMR, ou un reformeur à convection ; ledit gaz de processus étant un gaz de synthèse comprenant des oxydes de carbone et de l'hydrogène, dans lequel le processus comprend le refroidissement du gaz de synthèse en le faisant passer à travers la chaudière de récupération de chaleur de gaz de processus (PGWHB) selon l'une quelconque des revendications 1-8.
